# FASCICULE DE BREVET EUROPEEN

(11) **EP 2 886 988 B1**
(45) Date de publication et mention de la délivrance du brevet: **20.12.2017**
(21) Numéro de dépôt: 14447010.1
(22) Date de dépôt: 15.10.2014
(51) Int. Cl.: F28C 1/02, F28F 25/02

(54) **Réfrigérant atmosphérique à tirage forcé avec récupération ou production d'énergie et kit pour un tel réfrigérant**
Kühlturm mit Zwangsbelüftung mit Energierückgewinnung oder -erzeugung, und Kit für einen solchen Kühlturm
Forced-draft cooling tower with energy recovery or production and kit for such a cooling tower

(30) Priorité: 18.10.2013 BE 201300705
(43) Date de publication de la demande: 24.06.2015
(73) Titulaire: Monjoie Cooling sprl, 1050 Bruxelles (BE)
(72) Inventeur: Monjoie, Michel, B-1050 Bruxelles (BE)
(74) Mandataire: Powis de Tenbossche, Roland

(56) Documents cités:
- WO-A1-95/15210
- WO-A2-2006/035299
- DE-A1-102007 036 343
- US-A- 3 894 853

## Description

La présente invention a pour objet un réfrigérant atmosphérique à tirage forcé pour le refroidissement d'eau par contact direct avec de l'air équipé d'un système de récupération ou de production d'énergie.

De nombreux types de réfrigérants atmosphériques existent.

On connaît par exemple des réfrigérants atmosphériques à tirage naturel comprenant une coque de grande dimension (80 à 150m, voire plus) pour assurer un débit d'air par tirage naturel. Au bas de cette coque, après son passage au travers du corps d'échange, l'eau tombe en pluie dans l'entrée d'air vers un bassin qui récupère l'eau. L'eau est alors pompée vers les installations à refroidir.

Pour réduire la hauteur de pompage, il a déjà été prévu de construire des tours de refroidissement à tirage naturel comprenant des goulottes de recueillement. Ces goulottes recueillent l'eau froide au sommet de l'entrée d'air diminuant ainsi la hauteur de pompage. De telles goulottes sont de dimension importante, par exemple présentant une hauteur de plus de 150cm et un écartement entre canal de goulottes adjacentes de plus de 100cm.

Les réfrigérants à tirage forcé sont de taille plus modeste, et sont composés de 1 a plusieurs cellules identiques adjacentes de moins de 20m en général. Le tirage est assuré par un ou des ventilateurs placés au-dessus de chaque cellule. Les goulottes connues pour les tours à tirage naturel ne conviennent absolument pas pour des réfrigérants à tirage forcé. En effet la place libre pour le placement de goulottes dans un réfrigérant à tirage forcé est très limité, et la structure n'est pas à même de supporter des goulottes de poids important. De plus, vu le faible espace libre situé sous le corps d'échange, le placement de goulottes ne permettra pas un gain substantiel de pompage.

De tels réfrigérants atmosphériques à tirage forcée comprenant au moins:
- un corps d'échange assurant un contact direct eau - air, l'eau s'écoulant depuis une face supérieure du corps d'échange vers une face inférieure du corps d'échange; ce corps d'échange est situé au-dessus de l'entrée d'air du réfrigérant.
- un système d'amenée amenant l'eau à refroidir au-dessus de la face supérieure du corps d'échange,
- un bassin pour récupérer l'eau, dont le sommet est avantageusement situé au niveau du sol;
- un ventilateur pour générer le passage d'air au travers du corps d'échange, avantageusement au moins à contre courant par rapport à l'écoulement de l'eau à refroidir.

Il existe des réfrigérants atmosphériques a tirage forcé équipés de petites goulottes en dessous du corps d'échange, dont le ventilateur est situé en dessous des goulottes. Ces goulottes sont complexes, équipées de multicanaux s'encrassant facilement, et d'une pièce mobile réduisant les éclaboussures. Elles sont adaptées uniquement à des réfrigérants nouveaux en béton pour la récupération de l'énergie de pompage.

On connaît par le document WO95/15210 un système de collecteur en deux couches, une couche supérieure avec des parois de ruissellement et une couche inférieure située sous sa paroi de collecte. Chaque paroi présente des ailes formant ainsi des canaux longitudinaux. Le système collecteur bi couche est situé au dessus des ventilateurs et constitue un frein au passage de l'air dans le corps d'échange. Le réfrigérant selon ce document comprend :
- un corps d'échange,
- un système d'amenée de liquide sur la face supérieure du corps d'échange,
- un ventilateur situé sous le corps d'échange pour générer un courant d'air au travers du corps d'échange pour refroidir le liquide, et
- un système pour récupérer le liquide sortant du corps d'échange.

Le réfrigérant selon ce document ne décrit pas un réfrigérant associé à un système de production d'énergie électrique.

DE102007036343 décrit un réfrigérant atmosphérique à tirage naturel dans lequel l'eau d'une rivière après être passée dans un condenseur est partiellement amenée au dessus d'un corps d'échange air - eau par contact direct, l'eau s'écoulant à travers le corps d'échange est récupérée directement dans un bassin, une partie de l'eau provenant du condenseur s'écoulant directement dans le bassin sans passer au travers du corps d'échange.

US3894853 décrit un laveur de gaz comprenant une section de refroidissement des gaz.

WO2006/035299 décrit un réfrigérant atmosphérique à tirage naturel où l'eau à refroidir s'écoule au travers du corps d'échange pour tomber directement dans le bassin.

Les réfrigérants atmosphériques à tirage forcé actuels sont essentiellement des éléments ajoutés à des installations existantes, ou sont associés à une installation à construire, en tant qu'éléments accessoires à l'installation à construire. Les réfrigérants atmosphériques à tirage forcé sont optimisés en ce qui concerne leur taille, leur encombrement et leur consommation électrique de ventilation et de pompage en fonction du degré de refroidissement à obtenir.

La présente invention a pour objet un système de goulottes simples pour la récupération optimale de l'eau à la sortie du corps d'échange des réfrigérants atmosphériques a tirage forcé, tout en ne perturbant pas le flux d'air, voire en le favorisant, et tout en évitant des éclaboussures. Cette récupération d'eau permet soit de réduire la hauteur de pompage soit de produire de l'énergie électrique en utilisant la pression de l'eau récupérée dans une turbine hydroélectrique. Le système de récupération peut-être installé dans des réfrigérants existants, a tirage naturel ou a tirage forcé dont le ventilateur est installé au sommet. Il est également indépendant de la structure du réfrigérant, et s'applique aussi bien a des réfrigérants en béton ou en FRP (Polyesther renforcé de fibres de verre)

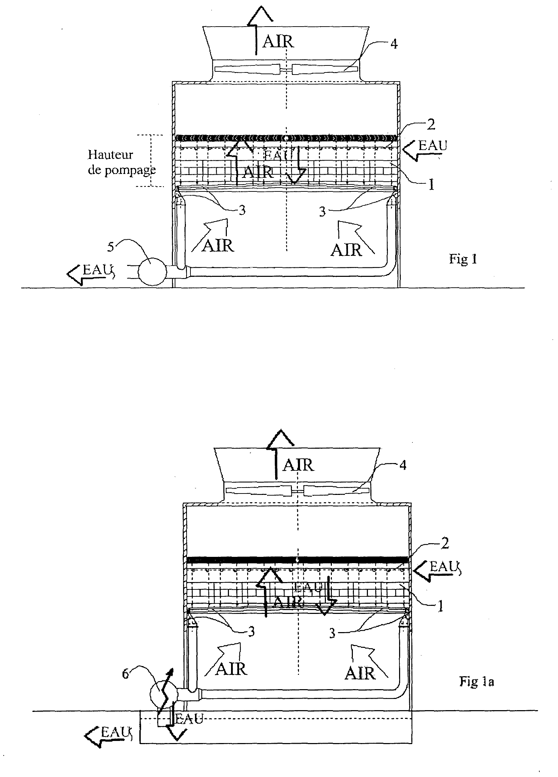

L'invention a pour objet un réfrigérant atmosphérique à tirage forcé pour le refroidissement d'eau par contact direct avec de l'air comprenant au moins (Fig 1 et Fig 1a):
- un corps d'échange (1) assurant un contact direct eau - air, l'eau s'écoulant depuis une face supérieure du corps d'échange vers une face inférieure du corps d'échange;
- un système d'amenée (2) amenant l'eau à refroidir au-dessus de la face supérieure du corps d'échange,
- un système (3) pour récupérer l'eau sortant du corps d'échange (1);
- un ventilateur (4) pour générer le passage d'air au travers du corps d'échange (1), avantageusement pour extraire l'air passant au travers du corps d'échange,
- au moins une pompe (5) renvoyant l'eau vers les installations à refroidir, ledit réfrigérant présentant avantageusement une faible hauteur de pompage relative au réfrigérant (Hauteur de pompage) définie entre le système d'amenée (2) et le système de récupération (3), ladite hauteur de pompage correspondant sensiblement à la hauteur séparant la face inférieure du corps d'échange (1) et le système d'amenée (2).

De manière avantageuse, ladite hauteur de pompage relative au réfrigérant définie entre le niveau inférieur moyen du système (3) de récupération d'eau sortant du corps d'échange et le niveau moyen du système d'amenée (2) d'eau au-dessus du corps d'échange (1) est comprise entre la hauteur du corps d'échange (1) plus 0,5m à 2 m, avantageusement entre 1 m et 1,5 m.

L'invention a pour objet en particulier à un réfrigérant atmosphérique et à des kits pour réfrigérants atmosphériques tels que revendiqués dans les revendications ci-jointes.

De manière spécifique, un objet de l'invention est un réfrigérant atmosphérique à tirage forcé pour le refroidissement d'eau par contact direct avec de l'air comprenant au moins:
- un corps d'échange (1) assurant un contact direct eau - air, l'eau s'écoulant depuis une face supérieure du corps d'échange vers une face inférieure du corps d'échange;
- un système d'amenée (2) amenant l'eau à refroidir au-dessus de la face supérieure du corps d'échange,
- un système (3) pour récupérer l'eau sortant du corps d'échange (1), ledit système comprenant avantageusement un ou des collecteurs (33) situés sous le corps d'échange (1);
- un ventilateur (4) pour générer le passage d'air au travers du corps d'échange (1), avantageusement pour extraire l'air passant au travers du corps d'échange,
- un système de production d'énergie électrique utilisant une turbine hydro-électrique (6) rejetant l'eau dans un bassin du réfrigérant, ladite turbine étant située avantageusement au-dessus du bassin du réfrigérant, et
- au moins une pompe (5) renvoyant l'eau du bassin vers la ou les installations à refroidir,
ledit réfrigérant étant caractérisé en ce que au moins une tuyauterie reprend des tubes de descente (35) provenant de un ou plusieurs collecteurs (33) et amène l'eau par gravité à une turbine hydro-électrique (6) rejetant l'eau dans un bassin du réfrigérant alimentant la au moins une pompe (5) renvoyant l'eau vers la ou les installations à refroidir.

De préférence, les collecteurs et/ou goulottes sont associés à un système de conduites adapté pour que sensiblement toute l'eau traversant le corps d'échange (1) alimente au moins une, avantageusement une seule turbine hydro-électrique rejetant l'eau dans un bassin du réfrigérant.

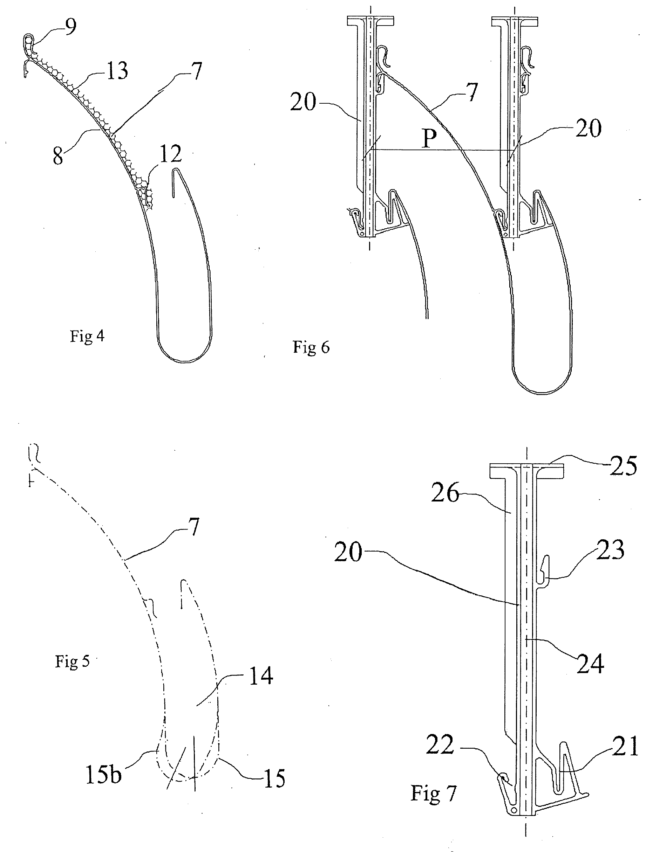

De préférence, le système de récupération d'eau (3) comprend en tout ou en partie:
- une série de goulottes (7) réalisées en matière plastique présentant une hauteur (H) définie entre le bord supérieur de la surface de recueillement et le fond du chenal comprise entre 20 et 60cm, une largeur (L) définie entre le flanc du bord supérieur de la surface de recueillement et le flanc extérieur du chenal comprise entre 12 et 35 cm ; les goulottes se recouvrant l'une par rapport à l'autre, avantageusement d'environ la largeur du chenal ; et un pas horizontal (P) compris entre 10 et 25 cm ; présentant
   (a) une surface de recueillement avantageusement courbe, alternativement plate (8), d'un angle compris entre 30 et 60° sur laquelle un tissu (avantageusement en fibre plastique) anti-éclaboussure (13) peut être posé.
   (b) un bord supérieur présentant d'une part un profilé à double courbure (9) ménageant un espace (10) permettant avantageusement la fixation facile par insertion, d'un tissu en fibre plastique anti-éclaboussure (13) a sa partie supérieure, et d'autre part un flanc vertical (11) d'une hauteur de au moins 1 cm, équipé d'une excroissance horizontale empêchant l'eau de s'écouler sur la surface inférieure de la zone de recueillement (8),
   (c) un profilé à double courbure (12) situé à la partie inférieure de la surface de recueillement (8) permettant avantageusement la fixation facile par insertion, d'un tissu en fibre plastique anti-éclaboussure (13) à sa partie inférieure (Fig 4),
   (d) un chenal (14) comprenant un fond arrondi (15) en demi-cercle ou ellipse dont l'axe est avantageusement vertical, mais pouvant être incliné (15b), un premier flanc courbe ou plat (16) prolongeant la surface de recueillement (8) jusque ledit fond arrondi (15) et un deuxième flanc courbe ou plat(17) s'étendant depuis le fond arrondi (15) vers un bord supérieur (18) du chenal (14),
   (e) un bord supérieur (18) du chenal (14) présentant une surface verticale (19) relié par une forte courbure au deuxième flanc (17);
- un système de support (20), espacé du pas (P), reprenant la partie supérieure de la goulotte, la partie inférieure de la goulotte adjacente, empêchant l'ouverture du chenal, comprenant :
   (a) un élément d'appui (21) situé dans la partie basse du support (20) ayant le profil complémentaire au bord supérieur (18) du chenal (14), sur lequel il s'appuie et qui empêche l'ouverture du chenal ;
   (b) un élément de fixation (22) situé en face de l'élément (21) qui vient se clipper dans le profilé à double courbure (12) situé dans le bas de la zone de recueillement d'une goulotte ;
   (c) un élément de fixation (23) situé dans la partie haute du support (20) qui vient se clipper dans le profilé à double courbure (9) situé dans le haut de la zone de recueillement de la goulotte adjacente ;
   (d) un trou (24) traversant de part en part le support (20) et destiné a recevoir une tige filetée en acier avantageusement inoxydable
   (e) une surface d'appui plate et horizontale (25) ;
   (f) des renforts (26) situé en dessous de la surface d'appui (25) et le long du support, assurant la solidité de l'ensemble
- un système d'intercalaire (27) placé entre le support (20) et les poutres support principale (30), avantageusement du ruissellement du réfrigérant, ledit système étant adapté pour assurer une inclinaison du fond du chenal des goulottes (7) vers un collecteur latéral (33), la hauteur (Z) de cet intercalaire (27) étant variable d'un support (20) à l'autre, suivant sa localisation dans le réfrigérant, ledit intercalaire étant avantageusement percé d'un trou (28) s'alignant avec le trou (24) du support (20);
- une tige filetée (31) traversant la poutre support principale (30), l'intercalaire (27) et le support (20) serre les éléments entre eux et introduit une précontrainte dans le système de support des goulottes;
- des éléments d'étanchéité (32) fixé d'une manière étanche aux parois et rejetant l'eau des parois dans la première et la dernière goulotte (7), et
- au moins un collecteur latéral (33) adapté pour collecter l'eau récupérée dans des goulottes (7), ledit ou lesdits collecteurs (33) présentant chacun un orifice d'évacuation (34) connecté à un tube de descente (35) et comprenant a l'intérieur du chenal des tirants (36) empêchant l'ouverture du collecteur et supportant une plaque avantageusement verticale (37) réduisant les turbulences de l'eau provenant des goulottes (7)

Selon un détail avantageux de formes de réalisation, le système de récupération d'eau (3) comprend au moins :
- des tissus anti éclaboussures (13), avantageusement en matière plastique, et
- une série de goulottes (7) réalisées en matière plastique présentant une hauteur (H) définie entre le bord supérieur de la surface de recueillement et le fond du chenal comprise entre 20 et 60cm, une largeur (L) définie entre le flanc du bord supérieur de la surface de recueillement et le flanc extérieur du chenal comprise entre 12 et 35 cm ; les goulottes se recouvrant l'une par rapport à l'autre, avantageusement d'environ la largeur du chenal ; et un pas horizontal (P) compris entre 10 et 25 cm ; présentant
   (a) une surface de recueillement avantageusement courbe, alternativement plate (8), d'un angle compris entre 30 et 60° sur laquelle au moins un tissu anti-éclaboussure (13) est posé pour que sensiblement au moins toute la surface de recueillement (8) soit recouverte par un ou des tissus anti-éclaboussures (13),
   (b) un bord supérieur présentant d'une part une profilé à double courbure (9) ménageant un espace (10) permettant une fixation facile par insertion, d'un tissu anti-éclaboussure (13) à sa partie supérieure, et d'autre part un flanc vertical (11) d'une hauteur de au moins 1 cm, équipé d'une excroissance horizontale empêchant l'eau de s'écouler sur la surface inférieure de la zone de recueillement (8),
   (c) un profilé à double courbure (12) situé à la partie inférieure de la surface de recueillement (8) permettant une fixation facile par insertion, d'un tissu anti-éclaboussure (13) à sa partie inférieure (Fig 4),
   (d) un chenal (14) comprenant un fond arrondi (15) en demi-cercle ou ellipse dont l'axe est avantageusement vertical, mais pouvant être incliné (15b), un premier flanc courbe ou plat (16) prolongeant la surface de recueillement (8) jusque ledit fond arrondi (15) et un deuxième flanc courbe ou plat(17) s'étendant depuis le fond arrondi (15) vers un bord supérieur (18) du chenal (14),
   (e) un bord supérieur (18) du chenal (14) présentant une surface verticale (19) relié par une forte courbure au deuxième flanc (17).

De préférence, pour la surface de recueillement des goulottes, sensiblement toute la face tournée vers le corps d'échange est recouverte par un ou des tissus anti-éclaboussures (13).

Selon un autre détail avantageux de formes de réalisation, au moins une tuyauterie reprend des tubes de descente (35) provenant de un ou plusieurs collecteurs (33) et amène l'eau par gravité à un bassin d'eau froide alimentant (avantageusement par gravité) les pompes de circulation à basse pression (5).

Selon toujours un autre détail avantageux de formes de réalisation, au moins une tuyauterie reprend des tubes de descente (35) provenant de un ou plusieurs collecteurs (33) et amène l'eau par gravité à une turbine hydro-électrique (6) rejetant l'eau dans un bassin du réfrigérant.

Selon encore un autre détail avantageux de formes de réalisation, les collecteurs et/ou goulottes sont associé à un système de conduites adapté pour que sensiblement toute l'eau traversant le corps d'échange (1) alimente une seule turbine hydro-électrique rejetant l'eau dans un bassin du réfrigérant.

Enfin selon une autre particularité de formes de réalisation, un tissu anti-éclaboussure, avantageusement en fibre plastique, est placé sur la surface de recueillement (8) des collecteurs (7), ledit tissu (13) étant fixé le long d'un de ses bords au profil (9) et le long de l'autre de ses bords au profil (12).

L'invention a encore pour objet un kit pour réaliser un système de récupération d'eau pour un réfrigérant atmosphérique existant comprenant:
- un corps d'échange (1) assurant un contact direct eau - air, l'eau s'écoulant depuis une face supérieure du corps d'échange vers une face inférieure du corps d'échange;
- un système d'amenée (2) amenant l'eau à refroidir au-dessus de la face supérieure du corps d'échange (1),
- un système pour récupérer l'eau sortant du corps d'échange (3);
- un moyen pour générer le passage d'air au travers du corps d'échange (4),
- un bassin pour récupérer l'eau sortant du corps d'échange (1) alimentant au moins une pompe (5) adaptée pour renvoyer l'eau vers une ou des installations à refroidir ;
ledit kit comprenant :
- un système comprenant des goulottes (7) et des collecteurs (33) associés à des tubes de descente (35), ledit système étant adapté pour être placé sous le corps d'échange (1) pour former un système (3) pour récupérer l'eau sortant du corps d'échange (1) ;
- un système de production d'énergie électrique utilisant une turbine hydro-électrique (6) adaptée pour rejeter l'eau dans le [un] bassin du réfrigérant atmosphérique, et
- au moins une tuyauterie adaptée pour reprendre des tubes de descente (35) l'eau provenant de un ou plusieurs collecteurs (33) et pour amener l'eau par gravité à la turbine hydro-électrique (6) adaptée pour rejeter l'eau dans le bassin du réfrigérant,
- de préférence au moins un tissu anti-éclaboussure (13), de préférence sous forme de rouleau.

De préférence, le kit selon l'invention comprend des éléments pour former un système de récupération d'eau (3), lesdits éléments comprenant en tout ou en partie:
en tout ou en partie:
   - une série de goulottes (7) réalisées en matière plastique présentant une hauteur (H) définie entre le bord supérieur de la surface de recueillement et le fond du chenal comprise entre 20 et 60cm, une largeur (L) définie entre le flanc du bord supérieur de la surface de recueillement et le flanc extérieur du chenal comprise entre 12 et 35 cm ; les goulottes se recouvrant l'une par rapport à l'autre, avantageusement d'environ la largeur du chenal ; et un pas horizontal (P) compris entre 10 et 25 cm ; présentant
      (a) une surface de recueillement avantageusement courbe, alternativement plate (8), d'un angle compris entre 30 et 60° sur laquelle un tissu en fibre plastique anti-éclaboussure (13) peut être posé.
      (b) un bord supérieur présentant d'une part un profilé à double courbure (9) ménageant un espace (10) permettant avantageusement la fixation facile par insertion, d'un tissu en fibre plastique anti-éclaboussure (13) a sa partie supérieure, et d'autre part un flanc vertical (11) d'une hauteur de au moins 1 cm, équipé d'une excroissance horizontale empêchant l'eau de s'écouler sur la surface inférieure de la zone de recueillement (8),
      (c) un profilé à double courbure (12) situé à la partie inférieure de la surface de recueillement (8) permettant avantageusement une fixation facile par insertion, d'un tissu (avantageusement en fibre plastique) anti-éclaboussure (13) à sa partie inférieure (Fig 4),
      (d) un chenal (14) comprenant un fond arrondi (15) en demi-cercle ou ellipse dont l'axe est avantageusement vertical, mais pouvant être incliné (15b), un premier flanc courbe ou plat (16) prolongeant la surface de recueillement (8) jusque ledit fond arrondi (15) et un deuxième flanc courbe ou plat(17) s'étendant depuis le fond arrondi (15) vers un bord supérieur (18) du chenal (14),
      (e) un bord supérieur (18) du chenal (14) présentant une surface verticale (19) relié par une forte courbure au deuxième flanc (17);
   - un système de support (20), espacé du pas (P), adapté pour reprendre la partie supérieure de la goulotte et la partie inférieure de la goulotte adjacente, et adapté pour s'opposer à ou empêcher l'ouverture du chenal, comprenant :
      (a) un élément d'appui (21) situé dans la partie basse du support (20) ayant le profil complémentaire au bord supérieur (18) du chenal (14), sur lequel il s'appuie et qui empêche l'ouverture du chenal ;
      (b) un élément de fixation (22) situé en face de l'élément (21) qui est adapté pour venir se clipper ou s'accrocher dans le profilé à double courbure (12) situé dans le bas de la zone de recueillement d'une goulotte ;
      (c) un élément de fixation (23) situé dans la partie haute du support (20) qui est adapté pour venir se clipper ou s'accrocher dans le profilé à double courbure (9) situé dans le haut de la zone de recueillement de la goulotte adjacente ;
      (d) un trou (24) traversant de part en part le support (20) et destiné à recevoir une tige filetée en acier avantageusement inoxydable
      (e) une surface d'appui plate et horizontale (25) ;
      (f) des renforts (26) situé en dessous de la surface d'appui (25) et le long du support, assurant la solidité de l'ensemble
   - un système d'intercalaire (27) placé entre le support (20) et les poutres support principale (30), avantageusement du ruissellement du réfrigérant, ledit système étant adapté pour assurer une inclinaison du fond du chenal des goulottes (7) vers un collecteur latéral (33), la hauteur (Z) de cet intercalaire (27) étant variable d'un support (20) à l'autre, suivant sa localisation dans le réfrigérant, ledit intercalaire étant avantageusement percé d'un trou (28) s'alignant avec le trou (24) du support (20);
   - une tige filetée (31) traversant la poutre support principale (30), l'intercalaire (27) et le support (20) serre les éléments entre eux et introduit une précontrainte dans le système de support des goulottes;
   - des éléments d'étanchéité (32) fixé d'une manière étanche aux parois et rejetant l'eau des parois dans la première et la dernière goulotte (7), et
   - au moins un collecteur latéral (33) adapté pour collecter l'eau récupérée dans des goulottes (7), ledit ou lesdits collecteurs (33) présentant chacun un orifice d'évacuation (34) connecté à un tube de descente (35) et comprenant a l'intérieur du chenal des tirants (36) empêchant l'ouverture du collecteur et supportant une plaque avantageusement verticale (37) réduisant les turbulences de l'eau provenant des goulottes (7)

Le kit selon l'invention est un kit pour réaliser un système de récupération d'eau pour un réfrigérant atmosphérique à tirage naturel ou a tirage forcé existant et comprenant un ou plusieurs éléments ((1) à (37)) que ceux décrits ci-avant, mais est également adapté pour réaliser un système de récupération d'eau pour les réfrigérants neufs.

Une forme de réalisation de réfrigérant selon l'invention présentant des caractéristiques données aux revendications, est représentée dans les dessins ci-annexés. Cette forme de réalisation est donnée à titre d'exemple uniquement. Des particularités et détails de l'invention ressortiront de la description suivante dans laquelle il est fait référence aux dessins ci-annexés.

Dans ces dessins,
- la figure 1 est une vue schématique d'un réfrigérant selon l'invention, dans le cas de la récupération d'énergie
- la figure 1a est une vue schématique d'un réfrigérant selon l'invention, dans le cas de la production d'énergie

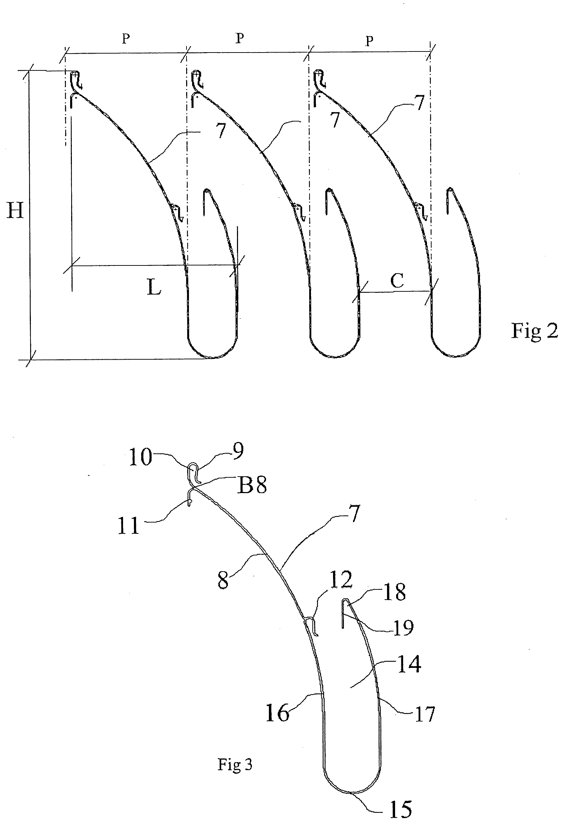

- la figure 2 est une vue de l'assemblage des goulottes du réfrigérant de la figure 1;
- la figure 3 est une vue détaillée d'une goulotte de la figure 2;
- la figure 4 est une vue de la goulotte équipée du dispositif anti-éclaboussure
- la figure 5 montre les axes des goulottes suivant deux possibilités relative a l'invention
- la figure 6 est une vue de l'assemblage ds goulottes sur leur support
- la figure 7 est une vue détaillée du support des goulottes de la figure 3

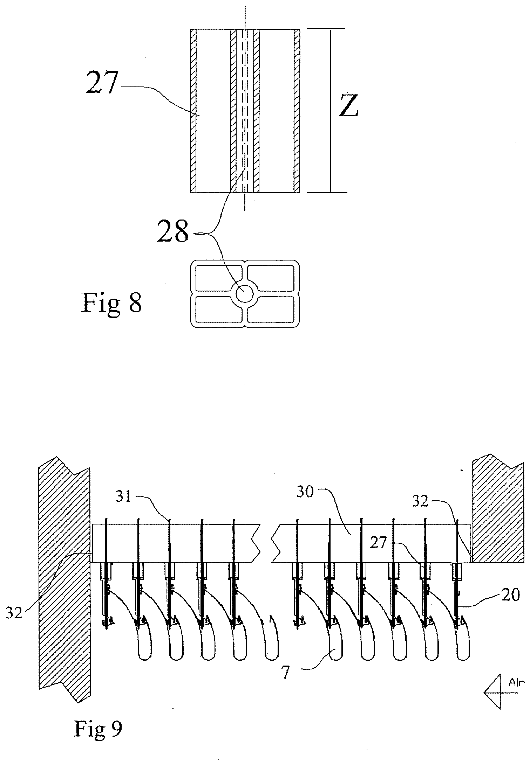

- la figure 8 est une vue détaillée de l'intercalaire selon l'invention
- la figure 9 est une vue générale de l'assemblage des composants du réfrigérant de la figure 1

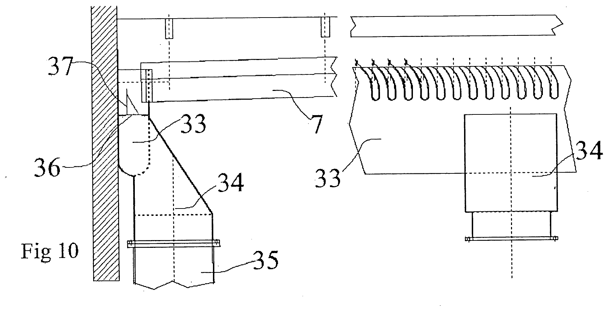

- la figure 10 est une vue détaillée du collecteur reliant les goulottes aux tuyauteries du réfrigérant selon l'invention

Les figures 1 et 1a montrent un réfrigérant atmosphérique à tirage forcé pour le refroidissement d'eau par contact direct avec de l'air comprenant au moins:
- un corps d'échange (1) assurant un contact direct eau - air, l'eau s'écoulant depuis une face supérieure du corps d'échange vers une face inférieure du corps d'échange (1) (l'eau s'écoulant par gravité dans le corps d'échange 1);
- un système de distribution d'eau (2) amenant l'eau à refroidir au-dessus de la face supérieure du corps d'échange (1), ce système de distribution (2) étant par exemple une rampe de têtes de pulvérisation,
- un système (3) pour récupérer l'eau sortant du corps d'échange;
- un ventilateur (4) pour générer le passage d'air au travers du corps d'échange (1), avantageusement au moins à contre courant par rapport à l'écoulement de l'eau à refroidir (par exemple le courant d'air entre dans le réfrigérant atmosphérique par le bas, en dessous du niveau du corps d'échange (1), pour rentrer dans le corps d'échange via sa face inférieure, sortir du corps d'échange par sa face supérieure , être aspiré par le ventilateur (4) et être refoulé par le ventilateur (4) hors du réfrigérant dans l'atmosphère. Les flèches Air et Eau indiquent un exemple de circulation d'air et d'eau dans le réfrigérant de la figure 1 et 1a.

Le réfrigérant de la figure 1 correspond a l'utilisation de l'invention dans le but de la réduction de la hauteur de pompage. Le réfrigérant de la figure 1a correspond à l'utilisation de l'invention dans le but de la production d'énergie

Le réfrigérant de la figure 1 est caractérisé en ce que le système de récupération d'eau 4 comprend:
- une série de goulottes (7) réalisées en matière plastique présentant une hauteur (H) définie entre le bord supérieur de la surface de recueillement et le fond du chenal comprise entre 20 et 60cm, une largeur (L) définie entre le flanc du bord supérieur de la surface de recueillement et le flanc extérieur du chenal comprise entre 12 et 35 cm ; les goulottes se recouvrant l'une par rapport à l'autre, avantageusement d'environ la largeur du chenal ; et un pas horizontal (P) compris entre 10 et 25 cm ; présentant
   (a) une surface de recueillement avantageusement courbe, alternativement plate (8), d'un angle compris entre 30 et 60° sur laquelle un tissu en fibre plastique anti-éclaboussure (13) peut être posé.
   (b) un bord supérieur présentant d'une part une profilé à double courbure (9) ménageant un espace (10) permettant la fixation facile par insertion, d'un tissu en fibre plastique anti-éclaboussure (13) a sa partie supérieure, et d'autre part un flanc vertical (11) équipé d'une excroissance horizontale empêchant l'eau de s'écouler sur la surface inférieure de la zone de recueillement (8),
   (c) un profilé à double courbure (12) situé à la partie inférieure de la surface de recueillement (8) permettant la fixation facile par insertion, d'un tissu en fibre plastique anti-éclaboussure (13) à sa partie inférieure. (Fig 4)
   (d) un chenal (14) comprenant un fond arrondi (15) en demi-cercle dont l'axe est avantageusement vertical, mais pouvant être incliné (15b), un premier flanc (16) prolongeant la surface de recueillement (8) jusque ledit fond arrondi (15) et un deuxième flanc (17) s'étendant depuis le fond arrondi (15) vers un bord supérieur (18) du chenal (14)
   (e) un bord supérieur (18) du chenal (14) présentant une surface verticale (19) relié par une forte courbure au deuxième flanc (17)
- un système de support (20), espacé du pas (P), reprenant la partie supérieure de la goulotte, la partie inférieure de la goulotte adjacente, empêchant l'ouverture du chenal, comprenant
   (a) un élément d'appui (21) situé dans la partie basse du support (20) ayant le profil complémentaire au bord supérieur (18) du chenal (14), sur lequel il s'appuie et qui empêche l'ouverture du chenal ;
   (b) un élément de fixation (22) situé en face de l'élément (21) qui vient se clipper dans le profilé à double courbure (12) situé dans le bas de la zone de recueillement d'une goulotte
   (c) un élément de fixation (23) situé dans la partie haute du support (20) qui vient se clipper dans le profilé à double courbure (9) situé dans le haut de la zone de recueillement de la goulotte adjacente.
   (d) un trou (24) traversant de part en part le support (20) et destiné a recevoir une tige filetée en acier avantageusement inoxydable
   (e) une surface d'appui plate et horizontale (25)
   (f) des renforts (26) assurant la solidité de l'ensemble
- un système d'intercalaire (27) placé entre le support (20) et les poutres support principale (30), avantageusement du ruissellement du réfrigérant, permet d'induire l'inclinaison du fond du chenal des goulottes (7) vers le collecteur latéral (33) La hauteur (Z) de cet intercalaire (27) varie d'un support (20) à l'autre, suivant sa localisation dans le réfrigérant. Il est percé d'un trou (28) s'alignant avec le trou (24) du support (20)
- une tige filetée (31) traversant la poutre support principale (30), l'intercalaire (27) et le support (20) serre les éléments entre eux et introduit une précontrainte dans le système de support des goulottes.
- des éléments d'étanchéité (32) fixé d'une manière étanche aux parois et rejetant l'eau des parois dans la première et la dernière goulotte (7)
- au moins un collecteur latéral (33) adapté pour collecter l'eau récupérée dans des goulottes (7), ledit ou lesdits collecteurs (33) présentant chacun un orifice d'évacuation (34) connecté à un tube de descente (35) et comprenant a l'intérieur du chenal des tirants (36) empêchant l'ouverture du collecteur et supportant une plaque avantageusement verticale (37) réduisant les turbulences de l'eau provenant des goulottes (7)
- au moins une tuyauterie reprenant les tubes de descente (35) provenant de plusieurs collecteurs et amenant l'eau sous pression a une turbine hydro-électrique ou a un bassin d'eau froide pressurisé alimentant les pompes de circulation basse pression ou directement aux pompes de circulation basse pression.
- dans le cas de la production d'énergie, au moins une turbine hydro-électrique connectée a la tuyauterie d'amenée d'eau et rejetant l'eau dans le bassin du réfrigérant. Il peut y avoir une seule turbine pour tout le réfrigérant comprenant plusieurs cellules ou une seule turbine par cellule.

Le ventilateur (4) aspire l'air après son passage à travers le corps d'échange. Pour ce faire, il consomme de l'énergie. Une partie de l'énergie potentielle de l'eau après son passage à travers le corps d'échange peut être récupérée dans des installations neuves ou en particulier lors du retrofitting (réadaptation) d'installations existantes. Le réfrigérant peut être équipé de goulottes associée a une turbine hydroélectrique (6) reliée à une ou des tuyauteries connectés aux tubes de descente (35). Cette énergie électrique ainsi produite peut être suffisante ou partiellement suffisante pour compenser l'énergie d'entraînement du ventilateur (4).

Les goulottes sont réalisées en matière apte à être extruder par exemple en matière plastique, telle que PVC, PP, etc., avantageusement de faible épaisseur, par exemple d'épaisseur inférieure à 5mm, en particulier de 1,5mm à 2.5mm, cette faible épaisseur est avantageuse pour diminuer le poids et la quantité de matière utilisée.. Les parois peuvent être creuses et composés d'une double peau et de très faible épaisseur (0.3 a 1 mm) pour assurer la rigidité tout en consommant moins de matières.

Le premier profilé (11) de chaque goulotte (7) a une hauteur d'au moins 1 cm (avantageusement de 1 à 3 cm) mesurée depuis le bord supérieur (B8) de la surface de recueillement (8).

Dans la forme de réalisation représentée, le premier flanc (16) du chenal présente au moins une zone courbe. La courbure de la surface de recueillement (8) et la courbure desdites zones courbes des premier et deuxième flancs (16, 17) sont adaptées pour définir entre d'une part, la zone courbe du deuxième flanc (17) d'une première goulotte (7) et, d'autre part, la surface de recueillement (8) et la zone courbe du premier flanc (16) d'une deuxième goulotte (7) adjacente de la première goulotte, un canal C dont la section mesurée perpendiculairement à la zone courbe du deuxième flanc (17) est sensiblement constante.

Dans une forme de réalisation avantageuse, la surface de recueillement (8) et les zones courbes éventuelles des premier et deuxième flancs (16,17) présentent un rayon de courbure compris entre 15cm et l'infini (surface plane), par exemple avantageusement entre 20cm et 30cm.

Selon une particularité, les deuxième et troisième profilés (12, 18) des goulottes (7) s'étendent sensiblement à même hauteur.

Les éléments supports (20) présentent chacun :
- un élément allongé creux (24) dont l'axe est perpendiculaire à un plat (25), ledit creux (24) de l'élément étant adapté à livrer passage à une tige ou un profilé (27) (par exemple une tige filetée) fixée à des poutres supports principales (avantageusement les poutres support du corps d'échange (1)),
- un clip (22) monté au voisinage de l'extrémité inférieure, adapté pour recevoir le profil (12) situé dans la partie inférieure de la zone de recueillement de la goulotte ;
- un profil support (21) montée au voisinage de l'extrémité inférieure, adapté pour recevoir la partie supérieur (19) du chenal, supportant le poids du chenal et empêchant son ouverture sous la pression hydrostatique.
- un clip (23) monté au voisinage de l'extrémité supérieure, adapté pour recevoir le profil (9) situé dans la partie supérieure de la zone de recueillement de la goulotte adjacente.
- un plat (25) attaché à l'extrémité supérieure adapté pour prendre appui sur une pièce de la structure (par exemple une poutre (30) du réfrigérant), éventuellement avec interposition d'un intercalaire (27) de hauteur variable suivant sa localisation dans le réfrigérant.
- un renfort (26) parallèle à l'axe du creux (24). Ce renfort à la forme d'une aile s'étendant le long de la face du support (20) opposée à celle portant le clip (23). Le renfort (26) se prolonge avantageusement en dessous du plat (25) de part et d'autre du creux (24) dans un plan perpendiculaire au plat (25).

L'aile (26) sert également de moyen de guidage pour l'air circulant entre la face supérieure d'une surface de recueillement et la face inférieure d'une autre surface de recueillement (7), ou de moyen pour limiter la perturbation du courant d'air suite à l'obstacle formé par un élément support.

La pièce intercalaire (27) a par exemple la forme extérieure d'un profilé creux, de section carrée, rectangulaire ou circulaire, et contenant une section circulaire creuse (28) aligné avec le profil circulaire creux (24) du support. La hauteur Z de l'intercalaire dépend de la position du support dans le réfrigérant et permet d'introduire une inclinaison des goulottes (7) afin d'améliorer l'écoulement de l'eau dans le chenal (14)

Un assemblage, par exemple une tige filetée traverse le support (20), l'intercalaire (27) et les poutres support principale (30). Le serrage des écrous permet d'induire une précontrainte favorable a la rigidité et la résistance du système.

On a remarqué qu'avec de telles goulottes (7) fixées à de tels supports (20), il était possible d'obtenir un courant d'air bien distribué dans le corps d'échange, favorable a un bon refroidissement. On remarque également que le courant d'air entre deux goulottes adjacentes est adapté pour repousser les gouttes d'eau tombant du corps d'échange vers la partie supérieure de la zone de recueillement (8). De manière a éviter toutes éclaboussures, un tissu en fibre plastique (13) peut être posé sur la surface de recueillement ; ce dit tissu étant fixé dans les profils (9) et (12) de la goulotte.

L'invention a donc également pour objet un kit pour réaliser un système de récupération d'eau pour un réfrigérant atmosphérique à tirage naturel ou à tirage forcé, par exemple pour un réfrigérant existant, ce réfrigérant a tirage naturel ou a tirage forcé équipé de l'invention comprenant les mêmes éléments (1 à 35) que pour un nouveau réfrigérant tel que décrit ci-dessus.

Les goulottes, le système de support et le système de production ou de récupération d'énergie sont avantageusement ceux décrits dans l'exemple de réalisation.

L'utilisation de l'installation de la figure 1 ou 1a selon l'invention a montré qu'il était possible de récupérer facilement une grande partie de l'énergie potentielle de l'eau refroidi sortant du corps d'échange sous forme d'énergie électrique ou hydraulique, qu'il était possible de contrôler une bonne distribution de l'air devant passer au travers du corps d'échange, que la récupération de l'eau sortant du corps d'échange était optimale, qu'il était possible d'assurer un refroidissement dans le réfrigérant et donc de l'eau collectée par ces goulottes, qu'il était facile d'attacher les goulottes à leurs supports, que l'eau ruisselant sur les surface de recueillement n'est sensiblement pas perturbée par le courant d'air passant entre deux goulottes successives, d'éviter les éclaboussures, etc.

## Revendications

1. Réfrigérant atmosphérique à tirage forcé pour le refroidissement d'eau par contact direct avec de l'air comprenant au moins:
- un corps d'échange (1) assurant un contact direct eau - air, l'eau s'écoulant depuis une face supérieure du corps d'échange vers une face inférieure du corps d'échange;
- un système d'amenée (2) amenant l'eau à refroidir au-dessus de la face supérieure du corps d'échange,
- un système (3) pour récupérer l'eau sortant du corps d'échange (1), ledit système comprenant avantageusement un ou des collecteurs (33) situés sous le corps d'échange (1); et
- un ventilateur (4) pour générer le passage d'air au travers du corps d'échange (1),
**caractérisé en ce qu'**il comprend en outre :
- un système de production d'énergie électrique utilisant une turbine hydro-électrique (6) rejetant l'eau dans un bassin du réfrigérant, ladite turbine étant située avantageusement au-dessus du bassin du réfrigérant, et
- au moins une pompe (5) renvoyant l'eau du bassin vers la ou les installations à refroidir, et
**caractérisé en ce que** au moins une tuyauterie reprend des tubes de descente (35) provenant de un ou plusieurs collecteurs (33) et amène l'eau par gravité à une turbine hydro-électrique (6) rejetant l'eau dans un bassin du réfrigérant alimentant la au moins une pompe (5) renvoyant l'eau vers la ou les installations à refroidir.

2. Réfrigérant suivant la revendication 1, **caractérisé en ce que** les collecteurs et/ou goulottes sont associés à un système de conduites adapté pour que sensiblement toute l'eau traversant le corps d'échange (1) alimente au moins une, avantageusement une seule turbine hydro-électrique rejetant l'eau dans un bassin du réfrigérant.

3. Réfrigérant selon la revendication 1 ou 2, **caractérisé en ce que** ladite hauteur de pompage relative au réfrigérant définie entre le niveau inférieur moyen du système (3) de récupération d'eau sortant du corps d'échange et le niveau moyen du système d'amenée (2) d'eau au-dessus du corps d'échange (1) est comprise entre la hauteur du corps d'échange (1) augmentée de 0,5 à 2 m, avantageusement augmentée de 1 m à 1,5 m.

4. Réfrigérant suivant l'une quelconque des revendications 1 à 3, **caractérisé en ce que** le système de récupération d'eau (3) comprend en tout ou en partie:
- une série de goulottes (7) réalisées en matière plastique présentant une hauteur (H) définie entre le bord supérieur de la surface de recueillement et le fond du chenal comprise entre 20 et 60cm, une largeur (L) définie entre le flanc du bord supérieur de la surface de recueillement et le flanc extérieur du chenal comprise entre 12 et 35 cm ; les goulottes se recouvrant l'une par rapport à l'autre, avantageusement d'environ la largeur du chenal ; et un pas horizontal (P) compris entre 10 et 25 cm ; présentant
(a) une surface de recueillement avantageusement courbe, alternativement plate (8), d'un angle compris entre 30 et 60° sur laquelle un tissu, avantageusement en fibre plastique, anti-éclaboussure (13) peut être posé,
(b) un bord supérieur présentant d'une part un profilé à double courbure (9) ménageant un espace (10) permettant avantageusement la fixation facile par insertion, d'un tissu, avantageusement en fibre plastique, anti-éclaboussure (13) à sa partie supérieure, et d'autre part un flanc vertical (11) d'une hauteur de au moins 1 cm, équipé d'une excroissance horizontale empêchant l'eau de s'écouler sur la surface inférieure de la zone de recueillement (8),
(c) un profilé à double courbure (12) situé à la partie inférieure de la surface de recueillement (8) permettant avantageusement la fixation facile par insertion, d'un tissu , avantageusement en fibre plastique, anti-éclaboussure (13) à sa partie inférieure (Fig 4),
(d) un chenal (14) comprenant un fond arrondi (15) en demi-cercle ou ellipse dont l'axe est avantageusement vertical, mais pouvant être incliné (15b), un premier flanc courbe ou plat (16) prolongeant la surface de recueillement (8) jusque ledit fond arrondi (15) et un deuxième flanc courbe ou plat (17) s'étendant depuis le fond arrondi (15) vers un bord supérieur (18) du chenal (14),
(e) un bord supérieur (18) du chenal (14) présentant une surface verticale (19) relié par une forte courbure au deuxième flanc (17);
- un système de support (20), espacé du pas (P), reprenant la partie supérieure de la goulotte, la partie inférieure de la goulotte adjacente, empêchant l'ouverture du chenal, comprenant :
(a) un élément d'appui (21) situé dans la partie basse du support (20) ayant le profil complémentaire au bord supérieur (18) du chenal (14), sur lequel il s'appuie et qui empêche l'ouverture du chenal ;
(b) un élément de fixation (22) situé en face de l'élément (21) qui vient se clipper ou s'accrocher dans le profilé à double courbure (12) situé dans le bas de la zone de recueillement d'une goulotte ;
(c) un élément de fixation (23) situé dans la partie haute du support (20) qui vient se clipper ou s'accrocher dans le profilé à double courbure (9) situé dans le haut de la zone de recueillement de la goulotte adjacente ;
(d) un trou (24) traversant de part en part le support (20) et destiné à recevoir une tige filetée en acier avantageusement inoxydable
(e) une surface d'appui plate et horizontale (25) ;
(f) un ou des renforts (26) situés en dessous de la surface d'appui (25) et le long du support, assurant la solidité de l'ensemble
- un système d'intercalaire (27) placé entre le support (20) et les poutres supports principales (30), avantageusement du ruissellement du réfrigérant, ledit système étant adapté pour assurer une inclinaison du fond du chenal des goulottes (7) vers un collecteur latéral (33), la hauteur (Z) de cet intercalaire (27) étant variable d'un support (20) à l'autre, suivant sa localisation dans le réfrigérant, ledit intercalaire étant avantageusement percé d'un trou (28) adapté pour être aligné avec le trou (24) du support (20);
- une tige filetée (31) traversant la poutre support principale (30), l'intercalaire (27) et le support (20), ladite tige serrant les éléments entre eux et introduit une précontrainte dans le système de support des goulottes;
- des éléments d'étanchéité (32) fixé d'une manière étanche aux parois et rejetant l'eau des parois dans la première et la dernière goulotte (7), et
- au moins un collecteur latéral (33) adapté pour collecter l'eau récupérée dans des goulottes (7), ledit ou lesdits collecteurs (33) présentant chacun un orifice d'évacuation (34) connecté à un tube de descente (35) et comprenant a l'intérieur du chenal des tirants (36) empêchant l'ouverture du collecteur et supportant une plaque avantageusement verticale (37) réduisant les turbulences de l'eau provenant des goulottes (7)

5. Réfrigérant suivant l'une quelconque des revendications 1 à 4, **caractérisé en ce que** le système de récupération d'eau (3) comprend au moins :
- des tissus anti éclaboussures (13), avantageusement en matière plastique, et
- une série de goulottes (7) réalisées en matière plastique présentant une hauteur (H) définie entre le bord supérieur de la surface de recueillement et le fond du chenal comprise entre 20 et 60cm, une largeur (L) définie entre le flanc du bord supérieur de la surface de recueillement et le flanc extérieur du chenal comprise entre 12 et 35 cm ; les goulottes se recouvrant l'une par rapport à l'autre, avantageusement d'environ la largeur du chenal ; et un pas horizontal (P) compris entre 10 et 25 cm ; présentant :
(a) une surface de recueillement avantageusement courbe, alternativement plate (8), d'un angle compris entre 30 et 60° sur laquelle au moins un tissu anti-éclaboussure (13) est posé pour que sensiblement au moins toute la surface de recueillement (8) soit recouverte par un ou des tissus anti-éclaboussures (13),
(b) un bord supérieur présentant d'une part un profilé à double courbure (9) ménageant un espace (10) permettant une fixation facile par insertion, d'un tissu anti-éclaboussure (13) à sa partie supérieure, et d'autre part un flanc vertical (11) d'une hauteur de au moins 1 cm, équipé d'une excroissance horizontale empêchant l'eau de s'écouler sur la surface inférieure de la zone de recueillement (8),
(c) un profilé à double courbure (12) situé à la partie inférieure de la surface de recueillement (8) permettant une fixation facile par insertion, d'un tissu anti-éclaboussure (13) à sa partie inférieure (Fig 4),
(d) un chenal (14) comprenant un fond arrondi (15) en demi-cercle ou ellipse dont l'axe est avantageusement vertical, mais pouvant être incliné (15b), un premier flanc courbe ou plat (16) prolongeant la surface de recueillement (8) jusque ledit fond arrondi (15) et un deuxième flanc courbe ou plat(17) s'étendant depuis le fond arrondi (15) vers un bord supérieur (18) du chenal (14),
(e) un bord supérieur (18) du chenal (14) présentant une surface verticale (19) relié par une forte courbure au deuxième flanc (17).

6. Réfrigérant selon la revendication 5, **caractérisé en ce que** pour la surface de recueillement des goulottes, sensiblement toute la face tournée vers le corps d'échange est recouverte par un ou des tissus anti-éclaboussures (13).

7. Réfrigérant suivant l'une quelconque des revendications 1 à 6, **caractérisé en ce qu'**un tissu anti-éclaboussure (13), avantageusement en fibre plastique, est placé sur la surface de recueillement (8) des collecteurs (7), ledit tissu (13) étant fixé le long d'un de ses bords au profil (9) et le long de l'autre de ses bords au profil (12).

8. Kit pour réaliser un système de récupération d'eau pour un réfrigérant atmosphérique comprenant:
- un corps d'échange (1) assurant un contact direct eau - air, l'eau s'écoulant depuis une face supérieure du corps d'échange vers une face inférieure du corps d'échange;
- un système d'amenée (2) amenant l'eau à refroidir au-dessus de la face supérieure du corps d'échange (1),
- un moyen (4) pour générer le passage d'air au travers du corps d'échange (1), et
- un bassin pour récupérer l'eau sortant du corps d'échange (1) alimentant au moins une pompe (5) adaptée pour renvoyer l'eau vers une ou des installations à refroidir;
ledit kit comprenant au moins :
- un système comprenant des goulottes (7) et des collecteurs (33) associés à des tubes de descente (35), ledit système étant adapté pour être placé sous le corps d'échange (1) pour former un système (3) pour récupérer l'eau sortant du corps d'échange (1) ;
- un système de production d'énergie électrique utilisant une turbine hydro-électrique (6) adaptée pour rejeter l'eau dans le bassin du réfrigérant atmosphérique, et
- au moins une tuyauterie adaptée pour reprendre des tubes de descente (35) l'eau provenant de un ou plusieurs collecteurs (33) et pour amener l'eau par gravité à la turbine hydro-électrique (6) adaptée pour rejeter l'eau dans le bassin du réfrigérant.

9. Kit suivant la revendication 8, **caractérisé en ce qu'**il comprend au moins un tissu anti-éclaboussure adapté pour le système (3) de récupération d'eau.

10. Kit suivant la revendication 8 ou 9, **caractérisé en ce que** il comprend des éléments pour former un système de récupération d'eau (3), lesdits éléments comprenant en tout ou en partie:
- une série de goulottes (7) réalisées en matière plastique présentant une hauteur (H) définie entre le bord supérieur de la surface de recueillement et le fond du chenal comprise entre 20 et 60cm, une largeur (L) définie entre le flanc du bord supérieur de la surface de recueillement et le flanc extérieur du chenal comprise entre 12 et 35 cm ; les goulottes se recouvrant l'une par rapport à l'autre, avantageusement d'environ la largeur du chenal ; et un pas horizontal (P) compris entre 10 et 25 cm ; présentant
(a) une surface de recueillement avantageusement courbe, alternativement plate (8), d'un angle compris entre 30 et 60° sur laquelle un tissu en fibre plastique anti-éclaboussure (13) peut être posé.
(b) un bord supérieur présentant d'une part un profilé à double courbure (9) ménageant un espace (10) permettant avantageusement la fixation facile par insertion, d'un tissu en fibre plastique anti-éclaboussure (13) à sa partie supérieure, et d'autre part un flanc vertical (11) d'une hauteur de au moins 1 cm, équipé d'une excroissance horizontale empêchant l'eau de s'écouler sur la surface inférieure de la zone de recueillement (8),
(c) un profilé à double courbure (12) situé à la partie inférieure de la surface de recueillement (8) permettant avantageusement la fixation facile par insertion, d'un tissu en fibre plastique anti-éclaboussure (13) à sa partie inférieure (Fig 4),
(d) un chenal (14) comprenant un fond arrondi (15) en demi-cercle ou ellipse dont l'axe est avantageusement vertical, mais pouvant être incliné (15b), un premier flanc courbe ou plat (16) prolongeant la surface de recueillement (8) jusque ledit fond arrondi (15) et un deuxième flanc courbe ou plat (17) s'étendant depuis le fond arrondi (15) vers un bord supérieur (18) du chenal (14),
(e) un bord supérieur (18) du chenal (14) présentant une surface verticale (19) relié par une forte courbure au deuxième flanc (17);
- un système de support (20), espacé du pas (P), adapté pour reprendre la partie supérieure de la goulotte, la partie inférieure de la goulotte adjacente, et adapté pour empêcher ou s'opposer à l'ouverture du chenal, comprenant :
(a) un élément d'appui (21) situé dans la partie basse du support (20) ayant le profil complémentaire au bord supérieur (18) du chenal (14), sur lequel il (21) est destiné à s'appuyer pour s'opposer à ou empêcher l'ouverture du chenal ;
(b) un élément de fixation (22) situé en face de l'élément (21) qui est adapté pour venir se clipper ou s'accrocher dans le profilé à double courbure (12) situé dans le bas de la zone de recueillement d'une goulotte ;
(c) un élément de fixation (23) situé dans la partie haute du support (20) qui est adapté pour venir se clipper ou s'accrocher dans le profilé à double courbure (9) situé dans le haut de la zone de recueillement de la goulotte adjacente ;
(d) un trou (24) traversant de part en part le support (20) et destiné à recevoir une tige filetée en acier avantageusement inoxydable
(e) une surface d'appui plate et horizontale (25) ;
(f) des renforts (26) situé en dessous de la surface d'appui (25) et le long du support, assurant la solidité de l'ensemble
- un système d'intercalaire (27) adapté pour être placé entre le support (20) et les poutres supports principales (30), avantageusement du ruissellement du réfrigérant, ledit système d'intercalaire (27) étant adapté pour assurer une inclinaison du fond du chenal des goulottes (7) vers un collecteur latéral (33), la hauteur (Z) de cet intercalaire (27) étant variable d'un support (20) à l'autre, suivant sa localisation dans le réfrigérant, ledit intercalaire étant avantageusement percé d'un trou (28) adapté pour être aligné avec le trou (24) du support (20);
- une tige filetée (31) adaptée pour traverser la poutre support principale (30), l'intercalaire (27) et le support (20) et pour serrer les éléments entre eux et introduire une précontrainte dans le système de support des goulottes;
- des éléments d'étanchéité (32) adaptés pour être fixés d'une manière étanche aux parois et pour rejeter l'eau des parois dans la première et la dernière goulotte (7), et
- au moins un collecteur latéral (33) adapté pour collecter l'eau récupérée dans des goulottes (7), ledit ou lesdits collecteurs (33) présentant chacun un orifice d'évacuation (34) connecté à un tube de descente (35) et comprenant a l'intérieur du chenal des tirants (36) empêchant l'ouverture du collecteur et supportant une plaque avantageusement verticale (37) réduisant les turbulences de l'eau provenant des goulottes (7).

11. Kit selon l'une des revendications 8 à 10, **caractérisé en ce qu'**il est adapté pour ne reprendre, via des goulottes (7), l'eau ne sortant que d'une partie de la surface totale inférieure du corps d'échange (1) du réfrigérant atmosphérique.

## Patentansprüche

1. Atmosphärischer Kühler mit künstlichem Zug zum Kühlen von Wasser durch direkten Kontakt mit der Luft, mindestens umfassend:
- einen Austauschkörper (1), der einen direkten Kontakt Wasser-Luft gewährleistet, wobei das Wasser von einer Oberseite des Austauschkörpers zu einer Unterseite des Austauschkörpers abfließt;
- ein Zuleitungssystem (2), das das zu kühlende Wasser über die Oberseite des Austauschkörpers leitet,
- ein System (3) zur Rückgewinnung des aus dem Austauschkörper (1) austretenden Wassers, wobei das System vorteilhafterweise einen oder mehrere Kollektoren (33) umfasst, die sich unter dem Austauschkörper (1) befinden; und
- einen Ventilator (4), um den Luftdurchgang durch den Austauschkörper (1) zu erzeugen,
**dadurch gekennzeichnet, dass** er ferner umfasst:
- ein System zur Erzeugung von elektrischer Energie, das eine hydroelektrische Turbine (6) verwendet, die das Wasser in ein Becken des Kühlers ableitet, wobei sich die Turbine vorteilhafterweise über dem Becken des Kühlers befindet, und
- mindestens eine Pumpe (5), die das Wasser von dem Becken zu der oder den zu kühlenden Anlage(n) schickt, und
**dadurch gekennzeichnet, dass** mindestens ein Rohrsystem absteigende Rohre (35), die von einem oder mehreren Kollektor(en) (33) kommen, aufnimmt und das Wasser durch Schwerkraft zu einer hydroelektrischen Turbine (6) leitet, die das Wasser in ein Becken des Kühlers ableitet, der die mindestens eine Pumpe (5) versorgt, die das Wasser zu der oder den zu kühlenden Anlage(n) schickt.

2. Kühler nach Anspruch 1, **dadurch gekennzeichnet, dass** die Kollektoren und/oder Kanäle einem Leitungssystem zugeordnet sind, das eingerichtet ist, dass im Wesentlichen das gesamte Wasser, das den Austauschkörper (1) durchquert, mindestens eine, vorteilhafterweise eine einzige hydroelektrische Turbine versorgt, die das Wasser in ein Becken des Kühlers ableitet.

3. Kühler nach Anspruch 1 oder 2, **dadurch gekennzeichnet, dass** die relative Pumphöhe am Kühler, die zwischen dem durchschnittlichen unteren Niveau des Systems (3) zur Rückgewinnung des aus dem Austauschkörper austretenden Wassers und dem durchschnittlichen Niveau des Systems (2) zur Zuleitung von Wasser über den Austauschkörper (1) definiert ist, zwischen der Höhe des Austauschkörpers (1), erhöht um 0,5 bis 2 m, vorteilhafterweise erhöht um 1 m bis 1,5 m, liegt.

4. Kühler nach einem der Ansprüche 1 bis 3, **dadurch gekennzeichnet, dass** das Wasserrückgewinnungssystem (3) zur Gänze oder teilweise umfasst:
- eine Reihe von Kanälen (7), die aus Kunststoff hergestellt sind und eine Höhe (H), die zwischen dem oberen Rand der Sammelfläche und dem Boden der Rinne zwischen 20 und 60 cm definiert ist, eine Breite (L), die zwischen der Seite des oberen Randes der Sammelfläche und der Außenseite der Rinne zwischen 12 und 35 cm definiert ist, aufweisen; wobei die Kanäle einander vorteilhafterweise um ungefähr die Breite der Rinne überdecken; und einen Horizontalabstand (P) zwischen 10 und 25 cm; umfassend
(a) eine vorteilhafterweise gekrümmte, alternativ flache, Sammelfläche (8) mit einem Winkel zwischen 30 und 60°, auf der ein Gewebe, vorteilhafterweise aus Kunstfaser, zum Vermeiden von Spritzern (13) angebracht sein kann,
(b) einen oberen Rand, der einerseits ein doppelt gekrümmtes Profil (9) aufweist, das einen Raum (10) ausnimmt, der vorteilhafterweise die einfache Befestigung durch Einsetzen eines Gewebes, vorteilhafterweise aus Kunstfaser, zum Vermeiden von Spritzern (13) in seinem oberen Teil ermöglicht, und andererseits eine vertikale Seitenfläche (11) mit einer Höhe von mindesten 1 cm aufweist, die mit einer horizontalen Ausstülpung versehen ist, die das Wasser daran hindert, auf der Unterseite der Sammelzone (8) abzufließen,
(c) ein doppelt gekrümmtes Profil (12), das sich im unteren Teil der Sammelfläche (8) befindet und vorteilhafterweise die einfache Befestigung durch Einsetzen eines Gewebes, vorteilhafterweise aus Kunstfaser, zum Vermeiden von Spritzern (13) in seinem unteren Teil (Fig. 4) ermöglicht,
(d) eine Rinne (14), umfassend einen halbkreis- oder ellipsenförmig abgerundeten Boden (15), dessen Achse vorteilhafterweise vertikal ist, aber geneigt (15b) sein kann, wobei eine erste gekrümmte oder ebene Seitenfläche (16) die Sammelfläche (8) bis zum abgerundeten Boden (15) verlängert und sich eine zweite gekrümmte oder ebene Seitenfläche (17) vom abgerundeten Boden (15) zu einem oberen Rand (18) der Rinne (14) erstreckt,
(e) einen oberen Rand (18) der Rinne (14), der eine vertikale Fläche (19) aufweist, die durch eine starke Krümmung mit der zweiten Seitenfläche (17) verbunden ist;
- ein Stützsystem (20), das um den Abstand (P) entfernt ist und den oberen Teil des Kanals aufnimmt, wobei der untere Teil des angrenzenden Kanals das Öffnen der Rinne verhindert, umfassend:
(a) ein Stützelement (21), das sich im unteren Teil der Stütze (20) befindet, mit einem zum oberen Rand (18) der Rinne (14), auf die es sich stützt, komplementären Profil, das das Öffnen der Rinne verhindert;
(b) ein Befestigungselement (22), das sich vorne an dem Element (21) befindet, das in das doppelt gekrümmte Profil (12), das sich im unteren Bereich der Sammelzone eines Kanals befindet, geklemmt oder eingehakt wird;
(c) ein Befestigungselement (23), das sich im oberen Teil der Stütze (20) befindet, das in das doppelt gekrümmte Profil (9), das sich im oberen Bereich der Sammelzone des angrenzenden Kanals befindet, geklemmt oder eingehakt wird;
(d) ein Loch (24), das durch die Stütze (20) hindurchgeht und dazu bestimmt ist, eine Gewindestange aus vorzugsweise rostfreiem Stahl aufzunehmen;
(e) eine flache und horizontale Stützfläche (25);
(f) eine oder mehrere Verstärkungen (26), die sich unter der Stützfläche (25) und entlang der Stütze befinden und die Festigkeit der Einheit gewährleisten;
- ein Zwischensystem (27), das zwischen der Stütze (20) und den Hauptstützpfeilern (30), vorteilhafterweise des Rieselns des Kühlers, angeordnet ist, wobei das System dazu vorgesehen ist, eine Neigung des Bodens der Rinne der Kanäle (7) zu einem seitlichen Kollektor (33) zu gewährleisten, wobei die Höhe (Z) dieses Zwischensystems (27) von einer Stütze (20) zur anderen je nach seiner Lokalisierung im Kühler variabel ist, wobei das Zwischensystem vorteilhafterweise mit einem Loch (28) versehen ist, das dazu vorgesehen ist, mit dem Loch (24) der Stütze (20) ausgerichtet zu werden;
- eine Gewindestange (31), die durch den Hauptstützpfeiler (30), das Zwischensystem (27) und die Stütze (20) hindurchgeht, wobei die Stange die Elemente untereinander festklemmt und eine Vorspannung in das Stützsystem der Kanäle einführt;
- Dichtungselemente (32), die dicht an den Wänden befestigt sind und das Wasser von den Wänden in den ersten und den letzten Kanal (7) ableiten, und
- mindestens einen Seitenkollektor (33), der dazu vorgesehen ist, das in den Kanälen (7) rückgewonnene Wasser zu sammeln, wobei der oder die Kollektoren (33) jeweils eine Ableitungsöffnung (34) aufweisen, die an ein Abstiegsrohr (35) angeschlossen ist, und innerhalb der Rinne Zugstangen (36) umfassen, die das Öffnen des Kollektors verhindern und eine vorteilhafterweise vertikale Platte (37) tragen, die die Turbulenzen des von den Kanälen (7) kommenden Wassers verringern.

5. Kühler nach einem der Ansprüche 1 bis 4, **dadurch gekennzeichnet, dass** das Wasserrückgewinnungssystem (3) mindestens umfasst:
- Gewebe (13) zum Vermeiden von Spritzern, vorteilhafterweise aus Kunststoff, und
- eine Reihe von Kanälen (7), die aus Kunststoff hergestellt sind und eine Höhe (H), die zwischen dem oberen Rand der Sammelfläche und dem Boden der Rinne zwischen 20 und 60 cm definiert ist, eine Breite (L), die zwischen der Seite des oberen Randes der Sammelfläche und der Außenseite der Rinne zwischen 12 und 35 cm definiert ist, aufweisen; wobei die Kanäle einander vorteilhafterweise um ungefähr die Breite der Rinne überdecken; und einen Horizontalabstand (P) zwischen 10 und 25 cm; umfassend
(a) eine vorteilhafterweise gekrümmte, alternativ flache, Sammelfläche (8) mit einem Winkel zwischen 30 und 60°, auf der mindestens ein Gewebe zum Vermeiden von Spritzern (13) angebracht ist, damit im Wesentlichen zumindest die Sammelfläche (8) mit einem oder mehreren Geweben (13) zum Vermeiden von Spritzern bedeckt ist,
(b) einen oberen Rand, der einerseits ein doppelt gekrümmtes Profil (9) aufweist, der einen Raum (10) ausnimmt, der die einfache Befestigung durch Einsetzen eines Gewebes zum Vermeiden von Spritzern (13) in seinem oberen Teil ermöglicht, und andererseits eine vertikale Seitenfläche (11) mit einer Höhe von mindesten 1 cm aufweist, die mit einer horizontalen Ausstülpung versehen ist, die das Wasser daran hindert, auf der Unterseite der Sammelzone (8) abzufließen,
(c) ein doppelt gekrümmtes Profil (12), das sich im unteren Teil der Sammelfläche (8) befindet und eine einfache Befestigung durch Einsetzen eines Gewebes zum Vermeiden von Spritzern (13) in seinem unteren Teil (Fig. 4) ermöglicht,
(d) eine Rinne (14), umfassend einen halbkreis- oder ellipsenförmig abgerundeten Boden (15), dessen Achse vorteilhafterweise vertikal ist, aber geneigt (15b) sein kann, wobei eine erste gekrümmte oder ebene Seitenfläche (16) die Sammelfläche (8) bis zum abgerundeten Boden (15) verlängert und sich eine zweite gekrümmte oder ebene Seitenfläche (17) vom abgerundeten Boden (15) zu einem oberen Rand (18) der Rinne (14) erstreckt,
(e) einen oberen Rand (18) der Rinne (14), der eine vertikale Fläche (19) aufweist, die durch eine starke Krümmung mit der zweiten Seitenfläche (17) verbunden ist.

6. Kühler nach Anspruch 5, **dadurch gekennzeichnet, dass** für die Sammelfläche der Kanäle im Wesentlichen die gesamte zum Austauschkörper gewandte Seite mit einen oder mehreren Geweben zum Vermeiden von Spritzern (13) bedeckt ist.

7. Kühler nach einem der Ansprüche 1 bis 6, **dadurch gekennzeichnet, dass** ein Gewebe zum Vermeiden von Spritzern (13), vorteilhafterweise aus Kunstfaser, auf der Sammelfläche (8) der Kollektoren (7) angeordnet ist, wobei das Gewebe (13) entlang einer seiner Ränder am Profil (9) und entlang des anderen seiner Ränder am Profil (12) befestigt ist.

8. Bausatz zur Herstellung eins Wasserrückgewinnungssystems für einen atmosphärischen Kühler, umfassend:
- einen Austauschkörper (1), der einen direkten Kontakt Wasser-Luft gewährleistet, wobei das Wasser von einer Oberseite des Austauschkörpers zu einer Unterseite des Austauschkörpers abfließt;
- ein Zuleitungssystem (2), das das zu kühlende Wasser über die Oberseite des Austauschkörpers (1) leitet,
- ein Mittel (4), um den Luftdurchgang durch den Austauschkörper (1) zu erzeugen,
und
- ein Becken, um das aus dem Austauschkörper (1) austretende Wasser aufzufangen, das mindestens eine Pumpe (5) versorgt, die eingerichtet ist, um das Wasser zu einer der zu kühlenden Anlagen zurückzuschicken;
wobei der Bausatz mindestens umfasst:
- ein System, umfassend Kanäle (7) und Kollektoren (33), die Abstiegsrohren (35) zugeordnet sind, wobei das System eingerichtet ist, um unter dem Austauschkörper (1) angeordnet zu werden, um ein System (3) zur Rückgewinnung des aus dem Austauschkörper (1) austretenden Wassers zu bilden;
- ein System zur Erzeugung von elektrischer Energie, das eine hydroelektrische Turbine (6) verwendet, die eingerichtet ist, um das Wasser in das Becken des atmosphärischen Kühlers abzuleiten, und
- mindestens ein Rohrsystem, das eingerichtet ist, um von den Abstiegsrohren (35) das von einem oder mehreren Kollektoren (33) kommende Wasser zu übernehmen, und um das Wasser durch Schwerkraft zu der hydroelektrischen Turbine (6) zu leiten, die eingerichtet ist, um das Wasser in das Becken des Kühlers abzuleiten.

9. Bausatz nach Anspruch 8, **dadurch gekennzeichnet, dass** er mindestens ein Gewebe zum Vermeiden von Spritzern umfasst, das für das Wasserrückgewinnungssystem (3) angepasst ist.

10. Bausatz nach Anspruch 8 oder 9, **dadurch gekennzeichnet, dass** er Elemente umfasst, um ein Wasserrückgewinnungssystem (3) zu bilden, wobei die Elemente zur Gänze oder teilweise umfassen:
- eine Reihe von Kanälen (7), die aus Kunststoff hergestellt sind und eine Höhe (H), die zwischen dem oberen Rand der Sammelfläche und dem Boden der Rinne zwischen 20 und 60 cm definiert ist, eine Breite (L), die zwischen der Seite des oberen Randes der Sammelfläche und der Außenseite der Rinne zwischen 12 und 35 cm definiert ist, aufweisen; wobei die Kanäle einander vorteilhafterweise um ungefähr die Breite der Rinne überdecken; und einen Horizontalabstand (P) zwischen 10 und 25 cm; umfassend
(a) eine vorteilhafterweise gekrümmte, alternativ flache, Sammelfläche (8) mit einem Winkel zwischen 30 und 60°, auf der mindestens ein Gewebe aus Kunstfaser zum Vermeiden von Spritzern (13) angebracht sein kann,
(b) einen oberen Rand, der einerseits ein doppelt gekrümmtes Profil (9) aufweist, der einen Raum (10) ausnimmt, der die einfache Befestigung durch Einsetzen eines Gewebes aus Kunstfaser zum Vermeiden von Spritzern (13) in seinem oberen Teil ermöglicht, und andererseits eine vertikale Seitenfläche (11) mit einer Höhe von mindesten 1 cm aufweist, die mit einer horizontalen Ausstülpung versehen ist, die das Wasser daran hindert, auf der Unterseite der Sammelzone (8) abzufließen,
(c) ein doppelt gekrümmtes Profil (12), das sich im unteren Teil der Sammelfläche (8) befindet und vorteilhafterweise die einfache Befestigung durch Einsetzen eines Gewebes aus Kunstfaser zum Vermeiden von Spritzern (13) in seinem unteren Teil (Fig. 4) ermöglicht,
(d) eine Rinne (14), umfassend einen halbkreis- oder ellipsenförmig abgerundeten Boden (15), dessen Achse vorteilhafterweise vertikal ist, aber geneigt (15b) sein kann, wobei eine erste gekrümmte oder ebene Seitenfläche (16) die Sammelfläche (8) bis zum abgerundeten Boden (15) verlängert und sich eine zweite gekrümmte oder ebene Seitenfläche (17) vom abgerundeten Boden (15) zu einem oberen Rand (18) der Rinne (14) erstreckt,
(e) einen oberen Rand (18) der Rinne (14), der eine vertikale Fläche (19) aufweist, die durch eine starke Krümmung mit der zweiten Seitenfläche (17) verbunden ist;
- ein Stützsystem (20), das um den Abstand (P) entfernt und eingerichtet ist, den oberen Teil des Kanals aufzunehmen, wobei der untere Teil des angrenzenden Kanals eingerichtet ist, das Öffnen der Rinne zu verhindern oder sich diesem zu widersetzen, umfassend:
(a) ein Stützelement (21), das sich im unteren Teil der Stütze (20) befindet, mit einem zum oberen Rand (18) der Rinne (14), auf die es (21) sich stützen soll, komplementären Profil, um das Öffnen der Rinne zu verhindern oder sich diesem zu widersetzen;
(b) ein Befestigungselement (22), das sich vorne an dem Element (21) befindet, das eingerichtet ist, um sich in das doppelt gekrümmte Profil (12), das sich im unteren Bereich der Sammelzone eines Kanals befindet, einzuklemmen oder einzuhaken;
(c) ein Befestigungselement (23), das sich im oberen Teil der Stütze (20) befindet, das eingerichtet ist, um sich in das doppelt gekrümmte Profil (9), das sich im oberen Bereich der Sammelzone des angrenzenden Kanals befindet, einzuklemmen oder einzuhaken;
(d) ein Loch (24), das durch die Stütze (20) hindurchgeht und dazu bestimmt ist, eine Gewindestange aus vorzugsweise rostfreiem Stahl aufzunehmen;
(e) eine flache und horizontale Stützfläche (25);
(f) Verstärkungen (26), die sich unter der Stützfläche (25) und entlang der Stütze befinden und die Festigkeit der Einheit gewährleisten;
- ein Zwischensystem (27), das eingerichtet ist, um zwischen der Stütze (20) und den Hauptstützpfeilern (30), vorteilhafterweise des Rieselns des Kühlers, angeordnet zu sein, wobei das Zwischensystem (27) dazu vorgesehen ist, eine Neigung des Bodens der Rinne der Kanäle (7) zu einem seitlichen Kollektor (33) zu gewährleisten, wobei die Höhe (Z) dieses Zwischensystems (27) von einer Stütze (20) zur anderen je nach seiner Lokalisierung im Kühler variabel ist, wobei das Zwischensystem vorteilhafterweise mit einem Loch (28) versehen ist, das dazu vorgesehen ist, mit dem Loch (24) der Stütze (20) ausgerichtet zu werden;
- eine Gewindestange (31), die eingerichtet ist, um durch den Hauptstützpfeiler (30), das Zwischensystem (27) und die Stütze (20) hindurchzugehen, und die Elemente untereinander festzuklemmen und eine Vorspannung in das Stützsystem der Kanäle einzuführen;
- Dichtungselemente (32), die eingerichtet sind, um dicht an den Wänden befestigt zu sein und das Wasser von den Wänden in den ersten und den letzten Kanal (7) abzuleiten, und
- mindestens einen Seitenkollektor (33), der dazu vorgesehen ist, das in den Kanälen (7) rückgewonnene Wasser zu sammeln, wobei der oder die Kollektoren (33) jeweils eine Ableitungsöffnung (34) aufweisen, die an ein Abstiegsrohr (35) angeschlossen ist, und innerhalb der Rinne Zugstangen (36) umfassen, die das Öffnen des Kollektors verhindern und eine vorteilhafterweise vertikale Platte (37) tragen, die die Turbulenzen des von den Kanälen (7) kommenden Wassers verringern.

11. Bausatz nach einem der Ansprüche 8 bis 10, **dadurch gekennzeichnet, dass** er eingerichtet ist, um über die Kanäle (7) nur das Wasser aufzunehmen, das aus einem Teil der unteren Gesamtfläche des Austauschkörpers (1) des atmosphärischen Kühlers austritt.

## Claims

1. Atmospheric refrigerant with forced draft for cooling water by direct contact with air, comprising at least:
- an exchange body (1) providing direct water-air contact, the water flowing from an upper face of the exchange body towards a lower face of the exchange body;
- a system (2) for supplying the water to be cooled above the upper face of the exchange body;
- a system (3) for collecting the water coming from the exchange body (1), said system advantageously comprising one or more collectors (33) located under the exchange body (1); and
- a fan (4) for generating the air flow through the exchange body (1),
**characterised in that** it further comprises:
- an electric power generating system using a hydroelectric turbine (6) discharging water into a basin , said turbine being advantageously located above the basin, and
- at least one pump (5) returning the water from the basin to the installation or installations to be cooled, and
**characterised in that** at least one pipe takes up drop tubes (35) from one or more collectors (33) and supplies the water by gravity to a hydro-electric turbine (6) discharging the water into the basin supplying the at least one pump (5) returning water to the installation (s) to be cooled.

2. Refrigerant according to Claim 1, **characterised in that** the collectors and/or ducts are associated with a pipe system adapted so that substantially all the water flowing through the exchange body (1) feeds at least one, advantageously a single hydroelectric turbine discharging water into the basin.

3. Refrigerant according to claim 1 or 2, **characterised in that** said refrigerant relative pumping height defined between the average lower level of the system (3) for collecting water coming from the exchange body and the average level of the system (2) for supplying water above the exchange body (1) is comprised between the height of the exchange body (1) increased by 0.5 to 2 m, advantageously increased by 1 m to 1.5 m.

4. Refrigerant according to any one of the claims 1 to 3, **characterised in that** the system for collecting water (3) comprises, in whole or in part:
- a series of ducts (7) made of plastic material having a height (H) defined between the upper edge of the collecting surface and the bottom of the channel comprised between 20 and 60 cm, a width (L) defined between the flank of the upper edge of the collecting surface and the outside flank of the channel comprised between 12 and 35 cm; the ducts overlapping each other, advantageously about the width of the channel; and a horizontal pitch (P) comprised between 10 and 25 cm; having
(a) an advantageously curved, alternately flat collecting surface (8) with an angle comprised between 30 and 60 ° on which an anti-splash fabric (13), preferably of plastic fiber, can be laid,
(b) an upper edge having on the one hand a double-curved profile (9) providing a space (10) advantageously allowing the easy attachment by insertion of an anti-splash fabric (13), advantageously made of plastic fiber, at its upper part, and on the other hand a vertical flank (11) with a height of at least 1 cm, provided with a horizontal projection preventing the water from flowing over the lower surface of the collecting zone (8),
(c) a double-curved profile (12) located at the lower part of the collecting surface (8) advantageously allowing easy insertion by insertion of an anti-splash fabric (13), advantageously made of plastic fiber, at its upper part (FIG. 4),
(d) a channel (14) comprising a bottom (15) curved in a semi-circle or -ellipse, the axis of which is advantageously vertical but which can be inclined (15b), a first curved or flat flank (16) extending the collecting surface (8) to the said curved bottom (15) and a second curved or flat flank (17) extending from the curved bottom (15) to an upper edge (18) of the channel (14),
(e) an upper edge (18) of the channel (14) having a vertical surface (19) connected by a strong curvature to the second flank (17);
- a supporting system (20), spaced from the pitch (P), taking up the upper part of the duct, the lower part of the adjacent duct preventing the opening of the channel, comprising:
(a) a bearing element (21) located in the lower part of the support (20) having the profile complementary to the upper edge (18) of the channel (14), on which it rests and which prevents the opening of the channel;
(b) a fastening element (22) located in front of the element (21) which snaps or clips into the double-curved profile (12) located at the bottom of the collecting zone of a duct;
(c) a fastening element (23) located in the upper part of the support (20) which snaps or clips into the double curved profile (9) located at the top of the collecting zone of the adjacent duct;
(d) a hole (24) extending through the support (20) and adapted for receiving a steel threaded rod, preferably in stainless steel ;
(e) a flat and horizontal bearing surface (25);
(f) one or more reinforcements (26) located below the bearing surface (25) and along the support, ensuring the solidity of the assembly;
- an intermediate system (27) placed between the support (20) and the main support beams (30), preferably of rain off of the refrigerant, said system being adapted to ensure an inclination of the bottom of the channel of the ducts (7) to a lateral collector (33), the height (Z) of said intermediate system (27) being variable from one support (20) to another, depending on its location in the refrigerant, said intermediate system being advantageously pierced with a hole (28) adapted to be aligned with the hole (24) of the support (20);
- a threaded rod (31) passing through the main support beam (30), the intermediate system (27) and the support (20), the said rod clamping the elements together and introducing a pre stress into the support system for the ducts;
- sealing elements (32) secured in a waterproof manner to the walls and discharging the water from the walls into the first and last ducts (7), and
- at least one lateral collector (33) adapted to collect the water collected from the ducts (7), said collector(s) (33) having each a discharge opening (34) connected to a drop tube (35) and comprising, within the channel, tie rods (36) preventing the opening of the collector and bearing a plate (37) advantageously vertical reducing the turbulence of the water coming from the ducts (7).

5. A refrigerant according to any one of the claims 1 to 4, **characterised in that** the system for collecting water (3) comprises at least:
- anti-splash fabrics (13), advantageously made of plastic material, and
- a series of ducts (7) made of plastic material having a height (H) defined between the upper edge of the collecting surface and the bottom of the channel comprised between 20 and 60cm, a width (L) defined between the flank of the upper edge of the collecting surface of and the outer flank of the channel comprised between 12 and 35 cm; the ducts overlapping each other, advantageously about the width of the channel; and a horizontal pitch (P) comprised between 10 and 25 cm; having :
(a) a collecting surface (8) advantageously curved, alternatively flat, with an angle comprised between 30 and 60 °, on which at least one anti splash fabric (13) is laid so that substantially at least the entire collecting surface (8) is covered by one or more anti splash fabrics (13),
(b) an upper edge having on the one hand a double-curved profile (9) providing a space (10) advantageously allowing the easy attachment by insertion of an anti-splash fabric (13), advantageously made of plastic fiber, at its upper part, and on the other hand a vertical flank (11) with a height of at least 1 cm, provided with a horizontal projection preventing the water from flowing over the lower surface of the collecting zone (8),
(c) a double-curved profile (12) located at the lower part of the collecting surface (8) advantageously allowing easy insertion by insertion of an anti-splash fabric (13) at its upper part (FIG. 4),
(d) a channel (14) comprising a bottom (15) curved in a semi-circle or -ellipse, the axis of which is advantageously vertical but which can be inclined (15b), a first curved or flat flank (16) extending the collecting surface (8) to the said curved bottom (15) and a second curved or flat flank (17) extending from the curved bottom (15) to an upper edge (18) of the channel (14),
(e) an upper edge (18) of the channel (14) having a vertical surface (19) connected by a strong curvature to the second flank (17).

6. A refrigerant according to claim 5, **characterised in that** for the collecting surface of the ducts, substantially all of the surface facing the exchange body is covered by one or more anti splash fabrics (13).

7. A refrigerant according to any one of the claims 1 to 6, **characterised in that** an anti-splash fabric (13), advantageously made of plastic fiber, is placed on the collecting surface (8) of the collectors (7), said fabric (13) being fixed along one of its edges to the profile (9) and along the other of its edges to the profile (12).

8. A kit for producing a water recovery system for an atmospheric refrigerant comprising:
- an exchange body (1) providing direct water-air contact, the water flowing from an upper face of the exchange body towards a lower face of the exchange body;
- a system (2) for supplying the water to be cooled above the upper face of the exchange body;
- a means (4) for generating the air flow through the exchange body (1), and
- a basin for collecting the water coming from the exchange body (1) supplying at least a pump (5) adapted for returning water to installation or installations to be cooled,
the said kit comprising at least:
- a system comprising ducts (7) and collectors (33) associated to drop tubes (35), the said system being adapted to be placed below the exchange body (1) for forming a system (3) for collecting the water flowing out of the exchange body (1);
- a system for producing electrical energy using a hydroelectric turbine (6) adapted to discharge water into the basin of the atmospheric refrigerant, and
- at least one pipe adapted for taking up in drop tubes (35) water from one or more collectors (33) and for supplying the water by gravity to a hydro-electric turbine (6) adapted for discharging the water into the basin of the refrigerant.

9. The kit according to claim 8, **characterised in that** it comprises at least one anti-splash fabric adapted for the system (3) for collecting water.

10. The kit of claim 8 or 9, **characterised in that** it comprises elements for forming a system (3) for collecting water, said elements comprising in whole or part :
- a series of ducts (7) made of plastic material having a height (H) defined between the upper edge of the collecting surface and the bottom of the channel comprised between 20 and 60 cm, a width (L) defined between the flank of the upper edge of the collecting surface and the outside flank of the channel comprised between 12 and 35 cm; the ducts overlapping each other, advantageously about the width of the channel; and a horizontal pitch (P) comprised between 10 and 25 cm; having
(a) an advantageously curved, alternately flat collecting surface (8) with an angle comprised between 30 and 60° on which an anti-splash fabric (13) of plastic fiber, can be laid,
(b) an upper edge having on the one hand a double-curved profile (9) providing a space (10) advantageously allowing the easy attachment by insertion of an anti-splash fabric (13) of plastic fiber, at its upper part, and on the other hand a vertical flank (11) with a height of at least 1 cm, provided with a horizontal projection preventing the water from flowing over the lower surface of the collecting zone (8),
(c) a double-curved profile (12) located at the lower part of the collecting surface (8) advantageously allowing easy insertion by insertion of an anti-splash fabric (13) of plastic fiber, at its lower part (FIG. 4)
(d) a channel (14) comprising a bottom (15) curved in a semicircle or ellipse, the axis of which is advantageously vertical but which can be inclined (15b), a first curved or flat flank (16) extending the collecting surface (8) to the said curved bottom (15) and a second curved or flat flank (17) extending from the curved bottom (15) to an upper edge (18) of the channel (14),
(e) an upper edge (18) of the channel (14) having a vertical surface (19) connected by a strong curvature to the second flank (17);
- a supporting system (20), spaced from the pitch (P), adapted to take up the upper part of the duct, the lower part of the adjacent duct and adapted for preventing or opposing the opening of the channel, comprising:
(a) a bearing element (21) located in the lower part of the support (20) having the profile complementary to the upper edge (18) of the channel (14), on which it is adapted to rest for opposing or preventing the opening of the channel;
(b) a fastening element (22) located in front of the element (21) which is adapted to snap or clip into the double-curved profile (12) located at the bottom of the collecting zone of a duct;
(c) a fastening element (23) located in the upper part of the support (20) which is adapted to snap or clip into the double curved profile (9) located at the top of the collecting zone of the adjacent duct;
(d) a hole (24) extending through the support (20) and adapted for receiving a steel threaded rod, advantageously in stainless steel ;
(e) a flat and horizontal bearing surface (25);
(f) one or more reinforcements (26) located below the bearing surface (25) and along the support, ensuring the solidity of the assembly;
- an intermediate system (27) adapted to be placed between the support (20) and the main support beams (30), advantageously of the rain off of the refrigerant, said system being adapted to ensure an inclination of the bottom of the channel of the ducts (7) to a lateral collector (33), the height (Z) of said intermediate system (27) being variable from one support (20) to another, depending on its location in the refrigerant, said intermediate system being advantageously pierced with a hole (28) adapted to be aligned with the hole (24) of the support (20);
- a threaded rod (31) adapted to pass through the main support beam (30), the intermediate system (27) and the support (20), and to clamp the elements together and to introduce a pre stress into the support system for the ducts;
- sealing elements (32) adapted to be secured in a waterproof manner to the walls and to discharge the water from the walls into the first and last ducts (7), and
- at least one lateral collector (33) adapted to collect the water collected from the ducts (7), said collector(s) (33) having each a discharge opening (34) connected to a drop tube (35) and comprising, within the channel, tie rods (36) preventing the opening of the collector and bearing a plate (37) advantageously vertical reducing the turbulence of the water coming from the ducts (7)

11. The kit according to any one of the claims 8 to 10, **characterised in that** it is adapted for taking up, via ducts (7), water flowing only from a part of the total lower surface of the exchange body (1) of the atmospheric refrigerant.
